# EUROPEAN PATENT APPLICATION

(11) **EP 0 854 310 A1**
(43) Date of publication of application: **22.07.1998**
(21) Application number: 97118613.5
(22) Date of filing: 27.10.1997
(51) Int. Cl.: F16K 24/04

(54) **A dual operation, automatic and manual, air bleed apparatus**

(30) Priority: 15.01.1997 IT MI970060
(71) Applicant: Watts Intermes S.p.A., 39052 Caldaro (BZ) (IT)
(72) Inventor: Betti, Giovanni, 38100 Trento (IT)
(74) Representative: Zavattoni Gusmeroli, Maria Chiara

(57) **Abstract**

An air venting apparatus, for a fluid circuit comprises a cover collaborating with a valve body or a pump body to form a chamber (20) communicating with the fluid circuit and communicating with outside through a primary orifice that can be closed by a primary shutter (36). The shutter is carried on a lever (34) pivoted on a fixed support (30) and integral with a float (40), so that the air orifice can be closed by the shutter, when the liquid level is enough to lift the float, by moving the lever into the closing position and opened when the liquid level is lowered. A manually operated air venting device (50) is provided in the cover, and comprises a through-hole housing having its axis at a distance from the shutter axis, said housing receiving a secondary shutter (60) that is spring-biased into a through-hole closing position, said secondary shutter being capable of being pressed from outside against the spring action so as to put the outside in communication with the inside. Preferably the manual device is so arranged that the secondary shutter acts onto the lever, thus possibly lowering it, thereby enhancing air flow on open position.

## Description

The present invention relates to air bleed or venting apparatus as they are provided on various hydro-thermo-sanitary plants in order to release air that can have accumulated in the conduits.

Various kinds of air bleed valves are available, generally located in a high part of the plant.

A known kind of venting valve comprises a valve structure consisting of a body and a cover, said body and cover enclosing a chamber. The valve body forms a reservoir that usually comprises a lower port which is threaded for connection to the plant. Within the chamber of the valve structure a float is received to which a lever is connected, said lever carrying a rubber shutter for a discharge orifice that is formed in the cover. The lever has its fulcrum on tongues that are solidly connected to the cover.

The operation of the known valve is as follows. When the liquid level is low in the chamber, the float takes an opening (lower) position, the lever takes a sloping position and removes the shutter from the orifice, thereby allowing a gap to be formed for the air to flow through. When the level of the water or of the liquid in the chamber rises, the float is lifted, thereby causing the lever to rotate around its fulcrum and bringing the shutter close to the orifice. In the maximum lifting position of the float, the lever presses the shutter against the orifice, thereby preventing air from flowing through. The above-described construction and operation do not provide, with the air valve closed, the absolute certainty that air is completely absent from inside the valve. In case of failure, the above-described mechanism (lever, shutter, spring and float) might remain in the closing position also in the presence of air, thereby impairing the regular operation of the valve.

Moreover, the above-described construction and operation only allow limited air discharge flow rates to be achieved. Consequently venting a large air volume (for example in the charging step of an empty plant) comes out to be penalizing from the point of view of the operation time.

It is therefore desirable to also have, besides this automatic operation for opening and closing the air discharge through the orifice, the possibility of opening or closing the air passage in certain circumstances also by manual operation, for example for inspection or cleaning purposes. It has been tried to couple this manual operation to the automatic operation by applying a needle or plunger device within the orifice. Such a device comprises a needle or plunger part that directly acts onto the shutter biasing it off the orifice. But the thus structured valves have not come out to be satisfying.

An object of the present invention is to provide an air valve that can be operated in either an automatic or manual way and that is satisfying from various points of view.

A further object is to create such a valve that would obviate the drawbacks of the prior art, be sound and reliable, and that would be inexpensive to manufacture.

Said objects are achieved by means of an apparatus as claimed in claim 1. Further new and advantageous features are recited in the subsequent claims. Objects of the invention are also an assembly as recited in claim 12 and an assembly as recited in claim 13.

The new apparatus has, besides a discharge orifice that can be closed by means of a primary shutter, said shutter being carried on a lever like in the conventional valves, also a manual discharge valve device that is spaced apart from the axis of said orifice, said manual device comprising a secondary shutter that is connected to a push-button stem, said stem being received in a through-hole in the cover of the venting apparatus. The shutter axis of the auxiliary manual valve device is preferably so arranged that the secondary shutter can act onto the lever on which the primary shutter is carried.

The new apparatus works efficiently, and the manual discharge part can be assembled in an extremely easy way, so that it can be manufactured at very limited costs, which costs are not much higher than the costs for a conventional automatic air venting valve. It allows the inside of the chamber to be put in communication with the outside environment when the automatic discharge orifice is closed; to cause the automatic discharge orifice to be opened by acting onto the lever and, consequently, onto the shutter that is solidly connected thereto. Moreover, it allows to check whether air is absent from inside the chamber and, consequently, whether the automatic discharge function is operating correctly; to speed up the filling operation of the empty plant by increasing the air discharge flow rate, to check whether the automatic discharge orifice allows the fluid to pass through or is obstructed; to promote the cleaning of the orifice by means of the forced discharge of water through it.

An exemplary embodiment of the inventive apparatus will be described hereinafter, in an unrestrictive way, with reference to the enclosed drawings in which:
figure 1 is a vertical section through an air venting apparatus of the invention, applied on a body of a valve, and shown in an automatic opening position when the liquid level is low;
figure 2 is a side elevational view of the stem of a manual discharge device enlarged with respect to figure 1;
figure 3 is a perspective view of the same stem;
figure 4 is an axial sectional view of the apparatus of figure 1 in automatic closing position when the liquid level in the chamber is high;
figure 5 is a sectional view similar to the previous figures, but showing the state of the apparatus of the invention in a manual discharge position, with a high liquid level;
figure 6 is a part-elevational and part-sectional side view of the apparatus applied to a pump body.

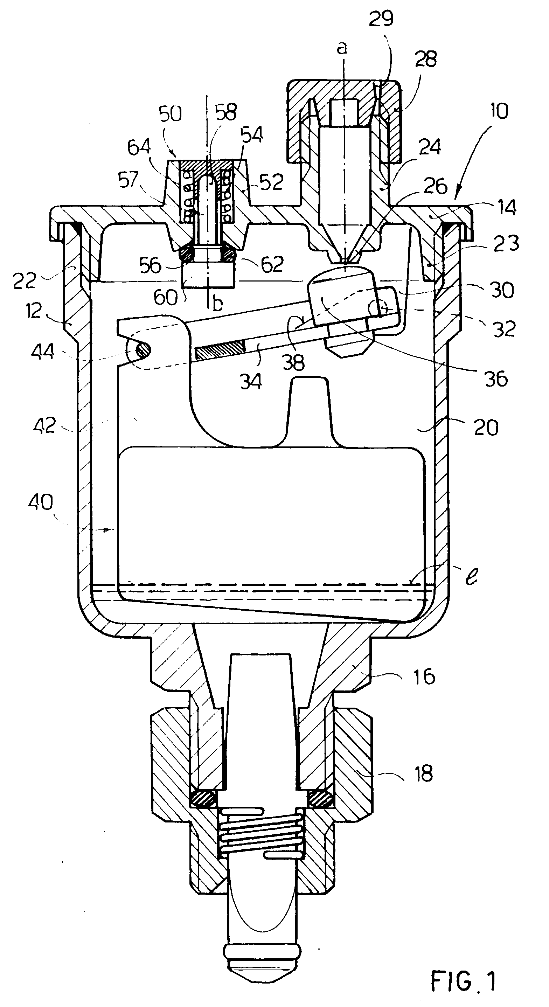

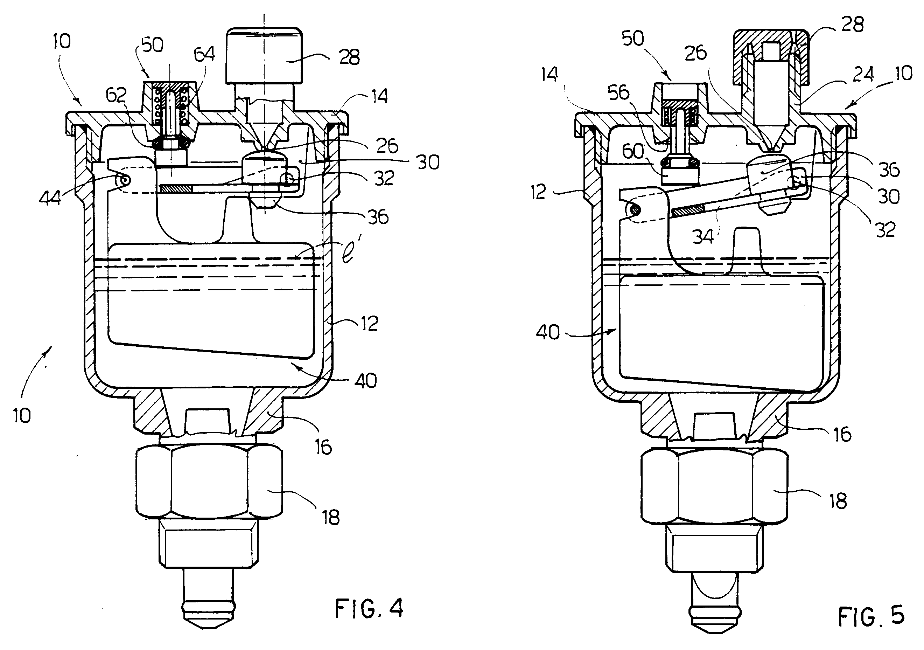

An air bleed or venting apparatus according to the invention is referenced generally with the reference numeral 10 and is shown applied to a valve body 12 in figures 1-5 and it comprises a cover 14.

Valve body 12 is provided in its lower part with a port 16 that can be screwed onto an automatic cut-off cock 18 that is connected to a liquid piping, said cut-off cock not being described in detail as known per se. The body 12 forms internally a chamber 20 and has an upper threaded aperture 22 onto which a mating threading of a cylindrical projection 23 of the cover 14 is screwed.

The cover 14 has a first collar 24 partly extending inside the chamber 20 and partly outside, said collar forming an orifice 26 inside the chamber. Collar 24 is externally provided with a removable cap 28 having a hole 29. Solidly connected to the lower part of cover 14 are two tongues 30 projecting downwards onto which a pin 32 is carried. This carries a lever 34 which in turn carries a primary shutter 36, generally made of rubber. Between the tongues 30 and the lever 34 a spring or a pair of springs 38 is preferably arranged as a support aid for the float. On the lever end opposite to fulcrum 32 a float 40 is hinged, preferably through a tongue 42 of the float that in turn is hinged on a pin 44 of the lever.

A manual venting device, generally referenced 50, comprises a second collar 52 on the cover, said second collar forming a second orifice or through-hole 54, coaxial to collar 52, preferably connected to the same, that connects the inside of chamber 20 with the outside. The part of the collar facing the inside of chamber 20 forms a seat 56. A secondary shutter 57 of the device comprises a stem 58 with longitudinal groovings, integral with a head 60. The axis b of the shutter of the manual device is arranged at a distance from axis a of the orifice 26. An operating button 59, lobe-shaped or notched, or anyway provided with passages is applied to stem 58 after the latter has been placed inside hole 54. Between the head 60 and a retaining tooth 61 the stem keeps an O-ring seal 62. The stem 58 is pressed in the closing position of the manual device by means of a spring 64, acting against a shoulder 55 of the cover and the button 59. In the closing position, the O-ring 62 is pressed against the seat 56.

Preferably, the two axis a, b are coplanar, with respect to a vertical plan passing through the lever 34; that is to say, the shutter of the manual device is preferably arranged so as to act onto lever 34, by means of a lever arm, with respect to pivot 32, longer than the lever arm of shutter 36. The button 59 is preferably not projecting from collar 52 in order to prevent it from being unintentionally actuated. Preferably, the button 59 is also arranged in such a way that it can be actuated only by means of a suitable tool, for example a screw driver, so as to avoid that an operator, by actuating it with a finger, may be burnt in case the liquid is at a high temperature; for example, the diameter of the button and the inner diameter of the collar in which it is received can be markedly lower than the width of a finger.

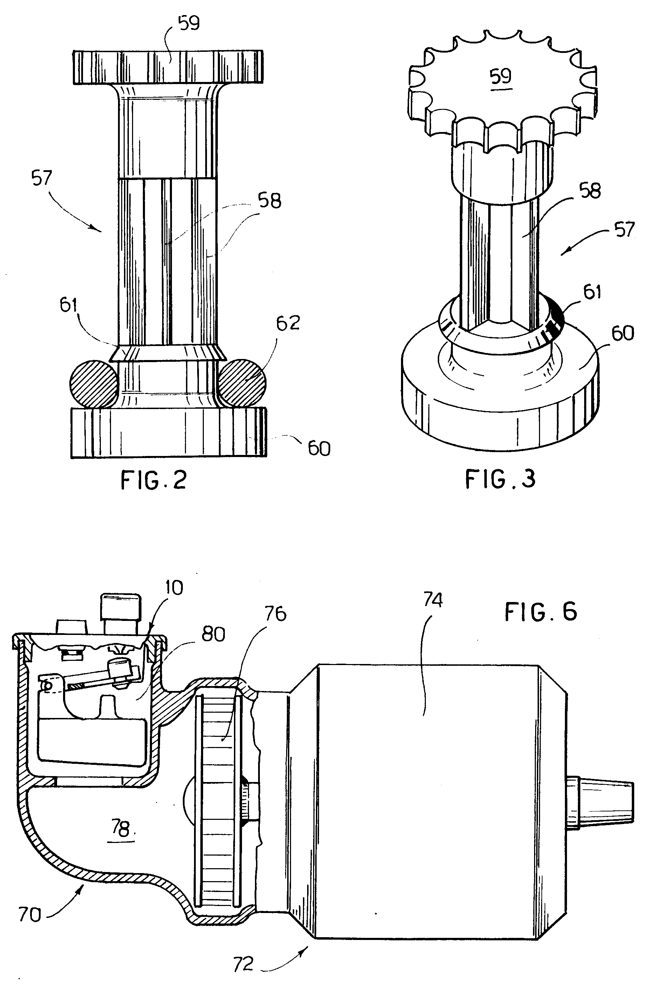

The operation of the venting valve apparatus 10 will now be described. In figure 1 an automatic operation situation with a low liquid level, ℓ, is shown. The float 40 is low on the liquid and tongue 42 through the pin 44 lowers the lever 34 and consequently the shutter 36 to open the orifice 26 and the hole 29'. A free air flow through the orifice 26 is thus created. As the liquid level in chamber 20 rises, the lever 34 rotates in clockwise direction around pin 32 and brings the shutter 36 near to the orifice 26 and finally closes it when the liquid is at a high level, ℓ', as is shown for example in figure 2. At this point the lever 34 is preferably rotated until it touches the head 60 of the manual device. Since in some conditions it can be useful to further bleed the air when the liquid level is equal to or greater than ℓ' or to purge the liquid itself, this can be realized by operating the manual device 50. Such a device is actuated by lowering the secondary shutter 57, that is by applying a pressure onto its upper surface so as to lower it inside the hole 54. This brings the head 60 with its O-ring 62 to a lower position relative to seat 56, thereby creating passages along the stem 58 (which is shaped with longitudinal slots) and along button 59 (which is lobe-shaped or anyway has a through-opening). Along such passages any air, which is at a higher pressure inside chamber 20 with respect to the outside, can flow or part of the liquid can be purged so as to keep the passage walls clean. Preferably, upon such a lowering, the head 60, as can be seen in figure 3, acts onto lever 34 and lowers it, thereby opening the orifice 26 by removing the shutter 36. In this way, the passage for air or liquid is enlarged, thereby enhancing the speed of the manual venting operation. Water discharging through the orifices 54 and 26 is an indication that no air is inside the reservoir, whilst air discharging through said orifices can be an indication of incomplete plant filling with water or of an ill-working automatic discharge function of the venting valve.

The venting apparatus according to the new invention herein described allows the manual discharge part to be assembled with an extreme ease, so that it can be manufactured at a very limited cost, in any case not much higher than the cost of a conventional automatic air valve. Moreover, it is provided with a very quick manual discharge and it is easy to operate.

In figure 6 apparatus 10 is shown applied to a pump body 70 of a pump unit 72, which include an engine 74 and a pump rotor 76. The pump body is shaped to have, in addition to a housing 78 for the engine and the rotor, a chamber 80, in communication with said housing 78. The cover 14 of the device is applied to the pump body at the said chamber, and the lever 34 and the shutter 40 are received in the chamber 80.

## Claims

1. A dual operation, automatic and manual, venting apparatus with a chamber (20; 80) communicating with a liquid system, said apparatus comprising a cover (14) with an orifice (26) and a primary shutter (36) for said orifice, brought on an oscillating lever (34) with respect to said cover, said lever being connected to a float (40) for cooperating with the liquid in said chamber,
characterized in that it also comprises
a manual venting device (50) comprising a second orifice or hole (54) for communication between said chamber and the outer environment, said second orifice being closed by a secondary shutter (57) that is spring-biased into a closing position, and is actuatable into an opening position against the force of said spring.

2. An apparatus according to claim 1, characterized in that the shutter (57) has a head (60), a stem (58) and an actuation button (59).

3. An apparatus according to claim 2 characterized in that said stem (57) and said actuation button (59) are provided with longitudinal slots.

4. An apparatus according to claim 1, characterized in that a central longitudinal axis (b) of the shutter of the manual device is arranged at a distance from a central longitudinal axis (a) of the venting orifice (26).

5. An apparatus according to claim 4, characterized in that the axis (b) is so arranged that the secondary shutter (57) of the manual device cooperates with the lever (34) carrying the main shutter, when said secondary shutter is pressed into the opening position.

6. An apparatus according to claim 1, characterized in that said lever (34) has its fulcrum on tongues that are carried by the cover (14).

7. An apparatus according to claim 2, characterized in that the button (59) of the secondary shutter (57) is not projecting from the cover (14).

8. An apparatus according to claim 7, characterized in that the diameter of the button (59) of the secondary shutter is smaller than the width of a finger.

9. An apparatus according to claim 4 characterized in that said axis (a, b) are coplanar and they both meet the lever (34) which brings the shutter.

10. An apparatus according to claim 4 characterized by the fact that the axis (b) of the shutter of the manual device is at a longer distance from the fulcrum of the shutter holder lever (34), with respect of the axis (a) of the primary shutter.

11. An apparatus according to claim 2 characterized in that said stem (58) has a projecting part (61) spaced apart from the head (60) and an annular gasket (62) between said projecting part (61) and said head (60).

12. An assembly comprising an apparatus according to claim 1 and a body valve forming a chamber, the cover (14) being applied on the top edge of said chamber.

13. An assembly comprising an apparatus according to claim 1 and a pump unit, a pump body (70) of said pump unit forming said chamber (80) and carrying said cover (14).
